# NEW EUROPEAN PATENT SPECIFICATION

(11) **EP 0 349 299 B2**
(45) Date of publication and mention of the opposition decision: **07.02.1996**
(45) Mention of the grant of the patent: 25.08.1993
(21) Application number: 89306576.3
(22) Date of filing: 28.06.1989
(51) Int. Cl.: C21D 9/60

(54) **A method and apparatus for heating a metallic elongated product**
Verfahren und Vorrichtung zum Erwärmen eines länglichen metallischen Gegenstandes
Procédé et dispositif pour chauffer un produit métallique allongé

(30) Priority: 28.06.1988 GB 8815371
(43) Date of publication of application: 03.01.1990
(60) Divisional application: 92116800.1
(73) Proprietor: Beta Instrument Company Limited, High Wycombe Bucks. HP12 3SW (GB)
(72) Inventor: Kyriakis, John, Beta Instrument Company Ltd., High Wycombe, Buckinghamshire HP12 3SW (GB)
(74) Representative: Cline, Roger Ledlie

(56) References cited:
- EP-A- 0 263 439
- FR-A- 1 466 448
- GB-A- 1 238 367
- GB-A- 2 072 224
- GB-A- 2 117 011
- US-A- 4 117 295
- Draht 38 (1987) 4, Page 301

## Description

Induction heating is often used for heating products. Elongated metallic products can be passed through an induction coil for heating.

GB-A-2 117 011 discloses a method for annealing non-ferrous strip material by passing the strip continuously around a pair of spaced pulleys and effecting a short circuit between incoming and outgoing strip material to form a closed electrical loop of strip material moving continuously around the pulleys. In that specification, the incoming and outgoing strip material are in contact at one of the pulleys, being located in the same single groove of the pulley. A material is caused to traverse the loop by driving the material through friction from one of the pulleys.

GB-A-2 072 224 discloses a similar method but here the incoming and outgoing strip material are in electrical contact being located in respective grooves of a double grooved conductive pulley, the electrical contact being made through the conductive material of the pulley. The drive is applied to the double grooved pulley for imparting motion to the elongated product.

This method of applying drive to the strip in the pulley groove where electrical contact takes place is sometimes not satisfactory and the present invention has been devised to provide an improved driving arrangement which does not interfere with the closing of the electric circuit of the loop.

In one aspect the invention relates to apparatus for heating a metallic elongated product comprising a plurality of pulleys for forming a closed loop of said product, the loop being closed by electrical contact between spaced portions of said product, one of said pulleys having a double groove, drive means for driving said double groove pulley, and an induction transformer for ihducing current in said closed loop forming the secondary winding of said transformer, and improves this aparatus by arranging a further one of said pulleys other than those forming said closed loop to receive said product from one of said double grooves and to return it to the other of said double grooves and by one of said double grooves being insulated from the other.

According to another aspect of the invention, there is provided a method of heating a metallic elongated product comprising passing it over a plurality of pulleys to form a closed loop, the loop being closed by electrical contact between spaced portions of said product, one of said pulleys having a double groove of which one groove is insulated from the other, passing the product from one groove of said one pulley to another pulley other than those forming said closed loop and back to the other groove of said one pulley, applying driving means to said one pulley and inducing a current in said closed loop.

An example of the invention will now be described with reference to the accompanying drawings in which:
Figure 1 is a diagram of apparatus for heating a metallic elongated product which does not exemplify the invention and forms the basis for a divisional application.
Figure 2 is a diametral section through a pulley in the apparatus of Figure 1.
Figure 3 is an equivalent circuit of the apparatus of Figure 1 and
Figures 4 and 5 are respectively a diagram and diametral section of a modification of the apparatus of Figures 1 to 3 incorporating the invention.

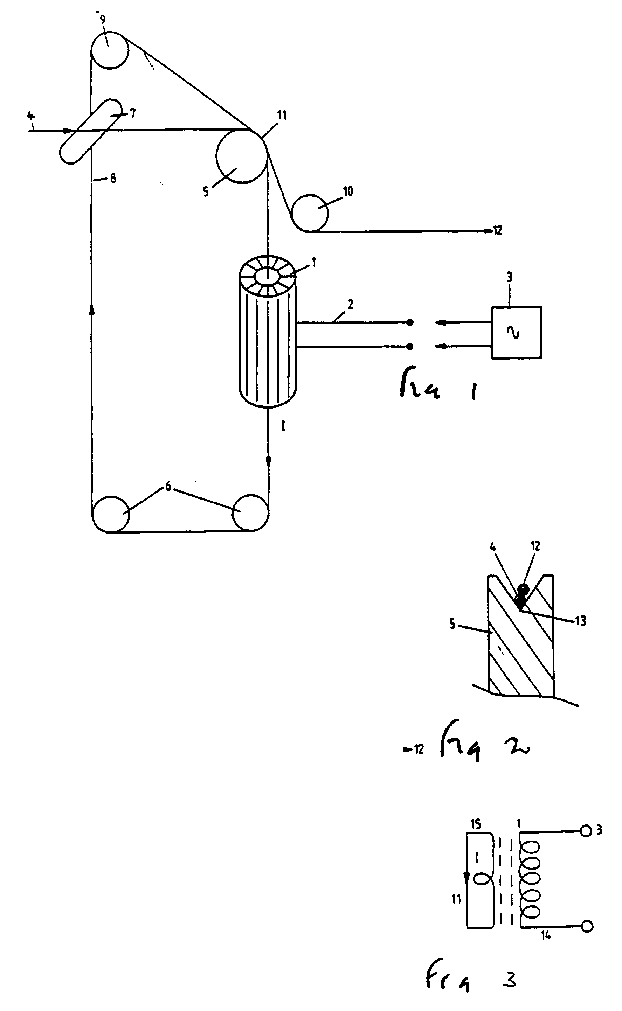

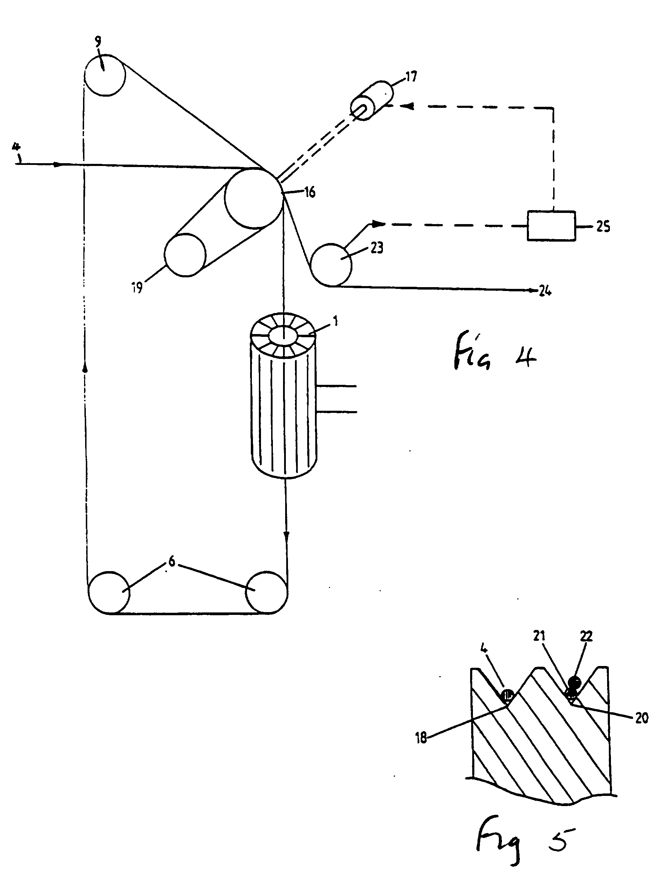

In the apparatus of Figures 1 to 3, an incoming wire strip 4 passes an insulating sliding bracket 7 and is turned through a right angle around an insulating pulley 5 to pass along the axis of an induction coil 1. The strip is then reversed by passing over two insulating pulleys 6 to pass on the other side of the bracket 7 and around a further insulating pulley 9 and re-enter the groove 13 of the pulley 5 to contact the incoming strip, passing thence around insulating deflecting pulley 10 to the output of the apparatus.

As can be seen in Figure 2, the insulating pulley 5 has a groove 13, at the base of which the incoming wire strip 4 is located and the outgoing wire strip 12 passing between the pulleys 9 and 10 is shown on top of and in contact with the incoming strip 4, thus completing the electrical contact between the incoming and outgoing strips 4 and 12 to complete the loop.

The induction coil is supplied with alternating power from a source 3 through a primary winding 2. The loop formed by the incoming and outgoing wire strips 4 and 12 between the pulleys (5, 6 and 9) form the secondary winding of the induction coil 1. The alternating voltage from source 3 induces a high current in the secondary loop to raise the wire temperature due to its inherent resistance and the temperature of the outgoing wire 12 is controlled by adjusting the voltage supplied by the source. The closing of the secondary winding is achieved simply by contact between the turns of the wire in the groove 13 and not through the pulleys, which are of insulating material, for example a ceramic material or glass.

The insulating sliding bracket is provided to keep the incoming wire strip 4 away from the strip passing from the second pulley 6 to the pulley 9, leaving the contact between the incoming and outgoing strips 4 and 12 to be made at the pulley 5.

In Figures 4 and 5, a driving pulley 16 replaces the pulley 5 of Figures 1 to 3 and has two grooves. The incoming strip 4 is located in the first groove and turns through about 135° before leaving the pulley 16 and travelling to an additional pulley 19. The strip then returns from the further pulley 19 to the second groove 20 of the pulley 16 where it turns through another 135° to travel along the axis of the coil 1. The strip 4 returning to the pulley 16 from the pulley 6 also lies in the second groove 20, on top of the incoming wire strip, thus completing the electrical contact between the incoming and outgoing strips to form the secondary winding of the induction coil.

A wire tension sensor is located at the final deflecting pulley 23 and feeds information to a control circuit 25 to control the torque generated by the servomotor 17 which drives the pulley 16.

## Claims

1. Apparatus for heating a metallic elongated product comprising a plurality of pulleys for forming a closed loop of said product, the loop being closed by electrical contact between spaced portions of said product, one of said pulleys having a double groove, drive means for driving said double groove pulley, and an induction transformer for inducing current in said closed loop forming the secondary winding of said transformer,
characterised by a further pulley other than those forming said closed loop arranged to receive said product from one of said double grooves and to retum it to the other of said double grooves and by one of said double grooves being insulated from the other.

2. Apparatus as claimed in Claim 1 wherein said pulleys are arranged so that the loop is closed by contact of spaced regions of the product in said other groove.

3. Apparatus as claimed in Claim 1 or Claim 2 comprising means for sensing the tension in the elongated product for controlling the drive means.

4. Apparatus as claimed in any one of Claims 1 to 3 wherein said one pulley is of insulating material.

5. Apparatus as claimed in Claim 4 wherein said insulating material is glass.

6. Apparatus as claimed in claim 4 wherein said insulating material is a ceramic insulating material.

7. A method of heating a metallic elongated product comprising passing it over a plurality of pulleys to form a closed loop, the loop being closed by electrical contact between spaced portions of said product, one of said pulleys having a double groove of which,one groove is insulated from the other, passing the product from one groove of said one pulley to another pulley other than those forming said closed loop and back to the other groove of said one pulley, applying driving means to said one pulley and inducing a current in said closed loop.

8. A method as claimed in Claim 7 comprising closing the loop by contacting spaced regions of said product at said other groove of said one pulley.

## Patentansprüche

1. Vorrichtung, um längliche metallische Gegenstände zu erwärmen, welche eine Mehrzahl von Riemenscheiben umfasst, um einen geschlossenen Kreis des besagten Gegenstands zu bilden, wobei die Schleife durch elektrischen Kontakt zwischen mit Abstand voneinander angeordneten Teilen des besagten Gegenstands geschlossen wird, wobei einer der besagten Riemenscheiben eine Doppelrille besitzt, Antriebsmittel um die besagte doppelrillige Riemenscheibe anzutreiben, und einen Induktionsfrequenzumformer um Strom in besagtem geschlossenen Kreis zu induzieren, wobei die Sekundärwicklung des besagten Umformers gebildet wird, gekennzeichnet durch eine weitere Riemenscheibe anders als jene, welche besagten geschlossenen Kreis bilden, die so angeordnet wird, um den besagten Gegenstand von einer der Doppelrillen zu empfangen und sie zur andern der besagten Doppelrillen zurückzugeben und dadurch dass eine der besagten Doppelrillen gegen die andere isoliert ist.

2. Vorrichtung wie in Anspruch 1 beansprucht, worin besagte Riemenscheiben so angeordnet sind, dass die Schleife durch Kontakt der mit Abstand voneinander angeordneten Bereiche des besagten Gegenstands in besagter anderer Rille geschlossen wird.

3. Vorrichtung wie in Anspruch 1 oder Anspruch 2 beansprucht, welche Mittel um die Zugspannung im länglichen Gegenstand zu fühlen umfasst, um das Antriebsmittel zu kontrollieren.

4. Vorrichtung wie in einem der Ansprüche 1 bis 3 beansprucht, worin besagte eine Riemenscheibe aus Isoliermaterial besteht.

5. Vorrichtung wie in Anspruch 4 beansprucht, worin besagtes Isoliermaterial Glas ist.

6. Vorrichtung wie in Anspruch 4 beansprucht, worin besagtes Isoliermaterial ein keramischer Isolierwerkstoff ist

7. Verfahren um einen länglichen metallischen Gegenstand zu erwärmen, welches umfasst, dass er über eine Mehrzahl von Riemenscheiben geführt wird, um einen geschlossenen Kreis zu bilden, wobei die Schleife durch den elektrischen Kontakt zwischen mit Abstand voneinander angebrachten Teilen des besagten Gegenstands geschlossen wird und eine der besagten Riemenscheiben eine Doppelrille besitzt, von welcher eine Rille gegen die andere isoliert ist, welche das Produkt von einer Rille der besagten Riemenscheibe zu einer anderen Riemenscheibe führt, anders als jene, welche besagten geschlossenen Kreis bilden, und zurück zur anderen Rille der besagten einen Riemenscheibe, wobei an der einen besagten Riemenscheibe Antriebsmittel angebracht sind und ein Strom in besagtem geschlossenen Kreis induziert wird.

8. Ein Verfahren wie in Anspruch 7 beansprucht, welches ein Schliessen der Schleife durch Kontakt der mit Abstand voneinander angebrachten Bereiche des besagten Gegenstands bei besagter anderer Rille der besagten einen Riemenscheibe umfasst.

## Revendications

1. Dispositif de chauffage d'un produit métallique allongé comprenant plusieurs poulies pour former une boucle fermée dudit produit, la boucle étant fermée par contact électrique entre des zones espacées dudit produit, une desdites poulies ayant une double gorge, des moyens d'entraînement pour entraîner ladite poulie à double gorge et en transformateur à induction pour enduire un courant dans ladite boucle fermée constituant l'enroulement secondaire dudit transformateur, caractérisé en ce qu'une autre poulie que celles aui forment ladite boucle fermée est prévue pour recevoir ledit produit de l'une desdites doubles gorges et pour le renvoyer à l'autre desdites doubles gorges et en ce que lesdites doubles gorges sont isolées l'une de l'autre.

2. Dispositif selon la revendication 1, caractérisé en ce que les poulies sont disposées de telle façon que la boucle est fermée par contact de zones espacées du produit dans ladite autre gorge.

3. Dispositif selon les revendications 1 ou 2 comprenant des moyens pour capter la tension dans le produit allongé pour contrôler les moyens d'entraînement.

4. Dispositif selon une quelconque des revendications 1 à 3, caractérisé en ce que ladite poulie est en matériau isolant.

5. Dispositif selon la revendication 4, caractérisé en ce que ledit matériau isolant est du verre.

6. Dispositif selon la revendication 4, caractérisé en ce que ledit matériau isolant est un matériau en céramique isolant.

7. Méthode de chauffage d'un produit métallique allongé consistant à le faire passer sur plusieurs poulies pour former une boucle, la boucle étant fermée par contact électrique entre des portions espacées dudit produit, une desdites poulies ayant une double gorge dont une gorge est isolée de l'autre, faisant passer le produit de la gorge de ladite première poulie à une autre poulie, autre que celles qui forment ladite boucle fermée, depuis une gorge de ladite poulie jusqu'à l'autre gorge de ladite poulie, à appliquer des moyens d'entraînement à ladite poulie et à enduire un courant dans ladite boucle fermée.

8. Méthode selon la revendication 7, consistant à fermer la boucle en mettant en contact des zones espacées dudit produit dans ladite autre gorge de ladite poulie.
